(19) **Europäisches Patentamt / European Patent Office / Office européen des brevets**

(11) **EP 3 764 570 B1**

(12) **FASCICULE DE BREVET EUROPEEN**

(45) Date de publication et mention
de la délivrance du brevet:
**06.05.2026  Bulletin 2026/19**

(21) Numéro de dépôt: **20184350.5**

(22) Date de dépôt: **06.07.2020**

(51) Classification Internationale des Brevets (IPC):
*H04B 17/21* (2015.01)        *H04B 17/12* (2015.01)
*H01Q 3/26* (2006.01)        *G01S 3/82* (2006.01)
*G01S 7/52* (2006.01)        *G01S 15/931* (2020.01)

(52) Classification Coopérative des Brevets (CPC):
**G01S 3/82; G01S 7/52004; G01S 15/931; H04B 17/12**

(54) **PROCÉDÉ DE CALIBRATION D'UNE ANTENNE ACOUSTIQUE, ET ANTENNE ACOUSTIQUE CORRESPONDANTE**

VERFAHREN ZUR EINSTELLUNG EINER AKUSTISCHEN ANTENNE, UND ENTSPRECHENDE AKUSTISCHE ANTENNE

METHOD FOR CALIBRATING AN ACOUSTIC ANTENNA, AND CORRRESPONDING ACOUSTIC ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2019  FR 1907639**

(43) Date de publication de la demande:
**13.01.2021  Bulletin 2021/02**

(73) Titulaire: **Commissariat à l'Energie Atomique et aux Energies Alternatives
75015 Paris (FR)**

(72) Inventeurs:
• **PERRIER, Régis**
  **38054 Grenoble cedex 09 (FR)**
• **NGUYEN, Van-Tri**
  **38054 Grenoble cedex 09 (FR)**

(74) Mandataire: **INNOV-GROUP
209 Avenue Berthelot
69007 Lyon (FR)**

(56) Documents cités:
**FR-A1- 2 699 687      US-A1- 2011 164 467**

**Description**

## DOMAINE TECHNIQUE

Le domaine technique de l'invention est le domaine des antennes acoustiques.

## ART ANTERIEUR

Une antenne acoustique est formée de transducteurs indépendants, disposés sur un support. En réponse à une onde acoustique se propageant vers l'antenne, chaque transducteur génère un signal, les signaux respectivement générés par les différents transducteurs étant individuellement accessibles.

De telles antennes sont actuellement utilisées dans des dispositifs de la vie courante. Elles peuvent par exemple équiper des sonars embarqués dans un véhicule, de façon à détecter la présence d'un obstacle à proximité du véhicule.

L'essor du développement de transducteurs de type résonateurs électromécaniques, qu'il s'agisse de MEMS (Micro-Electro Mechanical Systems) ou de NEMS (Nano-Electro Mechanical Systems), a permis la fabrication d'antennes acoustiques à un coût modéré. En effet, ces transducteurs sont fabriqués selon des procédés de microfabrication collectifs, ce qui réduit le coût de fabrication.

Généralement, les transducteurs s'étendent soit selon une ligne, soit selon une surface, le plus souvent plane. Une des conséquences de l'utilisation de transducteurs de faible coût est la présence d'imperfections. Ainsi, sur une même antenne, le gain et la phase des différents transducteurs peuvent présenter des disparités importantes. Le gain d'un transducteur conditionne l'amplitude du signal électronique généré par le transducteur en réponse à une onde acoustique. La phase est liée au temps de réponse d'un transducteur, c'est-à-dire le délai entre la réception d'une onde acoustique et la formation d'un signal électronique en réponse à cette onde.

Préalablement à l'utilisation d'une antenne, une phase de calibration est nécessaire, de façon à corriger les disparités entre les gains et les phases de chaque transducteur. Généralement, durant cette phase de calibration, on utilise une source de calibration dont l'emplacement doit être précisément contrôlé.

Le document US2011/0164467 décrit un procédé de calibration de transducteurs formant un Sonar. Dans ce document, l'objectif est de décrire une fonction de réponse angulaire de chaque transducteur. La fonction de réponse peut être obtenue en utilisant une sphère réfléchissante les transducteurs étant mobiles en rotation par rapport à la sphère. L'angle de rotation est précisément contrôlé : il varie par pas de 5° entre -75° et + 75°. Un tel procédé suppose de connaître précisément la position de la source de calibration.

Un autre document illustrant l'état antérieur de l'art est FR 2 699 687.

Les inventeurs ont conçu un procédé de calibration simple à mettre en œuvre, et pouvant être effectué manuellement, sans nécessiter un positionnement précis de la source de calibration.

## EXPOSE DE L'INVENTION

Un premier objet de l'invention est un procédé de calibration d'une antenne acoustique, l'antenne acoustique comportant une pluralité de transducteurs, chaque transducteur étant apte à générer un signal électrique sous l'effet d'une détection d'une onde acoustique, l'antenne comportant des transducteurs élémentaires répartis selon une ligne d'antenne ou un plan d'antenne, autour d'un transducteur de référence, l'antenne définissant un axe principal, passant par le transducteur de référence, et perpendiculaire à la ligne d'antenne ou au plan d'antenne, le procédé comportant les étapes suivantes :

a) disposition d'une source de calibration en au moins une position par rapport à l'antenne, la source de calibration étant apte à émettre une onde acoustique de calibration se propageant vers l'antenne ;
b) mesure des signaux générés par tout ou partie des transducteurs élémentaires en réponse à l'onde acoustique de calibration ;
c) à partir des mesures effectuées lors de l'étape b), détermination d'un déphasage temporel du signal respectivement généré par chaque transducteur élémentaire, chaque déphasage temporel étant déterminé par rapport à un signal de référence généré par le transducteur de référence ;
d) réitération des étapes a) à c), par exemple jusqu'à un nombre prédéterminé d'itérations, de telle sorte que lors d'au moins une itération, la position de la source de calibration est considérée comme centrée sur l'axe principal ;
le procédé comportant une estimation d'un déphasage, dit déphasage intrinsèque, de chaque transducteur élémentaire par rapport au transducteur de référence, l'estimation du déphasage comportant :
e) concaténation des déphasages temporels déterminés lors de chaque étape c), de façon à former un vecteur de déphasages mesurés;
f) prise en compte d'une matrice de passage telle que définie selon la revendication 1;

g) à partir de la matrice de passage et du vecteur de déphasages mesurés, estimation d'un déphasage de chaque transducteur élémentaire par rapport au transducteur de référence.

Selon un mode de réalisation, l'antenne s'étend selon un axe longitudinal. Au moins une itération des étapes a) à c) est mise en œuvre en disposant la source de calibration selon une position en dehors de l'axe principal, de telle sorte que l'onde acoustique émise par la source de calibration se propage vers le transducteur de référence en formant un premier angle par rapport à l'axe longitudinal. Le procédé est alors tel que :

- lors de l'étape f), la matrice de passage comporte les distances respectives, selon l'axe longitudinal, entre le transducteur de référence et chaque transducteur élémentaire;
- l'étape g) comporte une estimation du premier angle.

Dans la matrice de passage, les distances entre le transducteur de référence et chaque transducteur élémentaire, selon l'axe longitudinal, peuvent être normalisées par une vitesse de propagation de l'onde acoustique.

L'antenne peut également s'étendre selon un axe latéral, sécant de l'axe longitudinal, de telle sorte que l'onde acoustique émise par la source de calibration se propage vers le transducteur de référence en formant un deuxième angle par rapport à l'axe latéral. Le procédé est alors tel que:

- lors de l'étape f), la matrice de passage comporte les distances respectives, selon l'axe latéral, entre le transducteur de référence et chaque transducteur élémentaire;
- l'étape g) comporte une estimation du deuxième angle.

Dans la matrice de passage, les distances entre le transducteur de référence et chaque transducteur élémentaire, selon l'axe latéral, peuvent être normalisées par une vitesse de propagation de l'onde acoustique.

Selon un mode de réalisation,

- les itérations des étapes a) à c) sont répétées, la source de calibration étant centrée par rapport à l'axe principal ;
- la matrice de passage comporte une concaténation d'un nombre de matrices identité égal au nombre d'itérations effectuées, la dimension de chaque matrice identité correspondant au nombre de transducteurs élémentaires dont on souhaite déterminer le déphasage.

Les itérations des étapes a) à c) peuvent être répétées plusieurs fois pour au moins une même position de la source de calibration.

Pour tout ou partie des transducteurs élémentaires, le procédé peut comporter une étape h) d'émission d'une onde acoustique vers l'antenne, et d'une comparaison des signaux respectivement générés par chaque transducteur élémentaire et par le transducteur de référence en réponse à l'onde acoustique émise, de façon à assigner un gain à chaque transducteur élémentaire à partir de la comparaison. La comparaison peut être ou comporter un ratio entre les intégrales respectives des valeurs absolues des signaux respectivement généré par chaque transducteur élémentaire et par le transducteur de référence.

Les étapes e) à g) sont généralement mises en œuvre par une unité de traitement, reliée aux transducteurs de l'antenne.

Selon un mode de réalisation, un transducteur de l'antenne génère une onde acoustique vers un réflecteur, disposé face à l'antenne, de telle sorte que l'onde acoustique réfléchie par le réflecteur forme l'onde acoustique de calibration.

Un deuxième objet de l'invention est une antenne acoustique, comportant une pluralité de transducteurs, chaque transducteur étant configuré pour générer un signal électrique sous l'effet d'une détection d'une onde acoustique, l'antenne comportant des transducteurs élémentaires répartis selon une ligne d'antenne ou un plan d'antenne, autour d'un transducteur de référence, l'antenne définissant un axe principal, passant par le transducteur de référence, et perpendiculaire à la ligne d'antenne ou au plan d'antenne, l'antenne comportant une unité de traitement, configurée pour mettre en œuvre les étapes c) à g) d'un procédé selon le premier objet de l'invention, à partir de signaux générés par tout ou partie des transducteurs élémentaires en réponse à une onde acoustique de calibration émise par une source acoustique de calibration disposée face à l'antenne.

L'invention sera mieux comprise à la lecture de l'exposé des exemples de réalisation présentés, dans la suite de la description, en lien avec les figures listées ci-dessous.

**FIGURES**

La figure 1A représente une antenne acoustique planaire, l'antenne comportant des transducteurs acoustiques répartis selon un plan.

La figure 1B représente une antenne acoustique linéaire, l'antenne comportant des transducteurs acoustiques répartis selon une ligne.

Les figures 2A et 2B montrent une onde acoustique se propageant vers une antenne acoustique comportant des transducteurs alignés selon une ligne. Sur la figure 2A, l'onde se propage autour d'un axe de propagation perpendiculaire à ligne. Sur la figure 2B, l'onde se propage autour d'un axe de propagation incliné par rapport à la ligne.

La figure 2C est un exemple de signaux respectivement générés par deux transducteurs avant une calibration du déphasage.

La figure 2D est un exemple de signaux respectivement générés par deux transducteurs après une calibration du déphasage.

La figure 3 décrit les principales étapes d'un procédé de calibration de l'antenne.

La figure 4 montre une configuration de calibration selon laquelle une source de calibration est disposée selon un axe principal d'une antenne.

La figure 5A montre une configuration de calibration selon laquelle une source de calibration est disposée à distance de l'axe principal d'une antenne planaire.

La figure 5B montre un détail de la configuration représentée sur la figure 5A. L'onde acoustique de calibration se propage jusqu'à l'antenne en formant un premier angle avec un axe longitudinal du plan d'antenne.

La figure 5C montre un détail de la configuration représentée sur la figure 5A. L'onde acoustique de calibration se propage jusqu'à l'antenne en formant un deuxième angle avec un axe latéral du plan d'antenne.

La figure 6 montre une configuration de calibration selon laquelle un réflecteur réfléchit une onde acoustique générée par un transducteur de l'antenne, l'onde acoustique ainsi réfléchie formant l'onde acoustique de calibration.

## EXPOSE DE MODES DE REALISATION PARTICULIERS

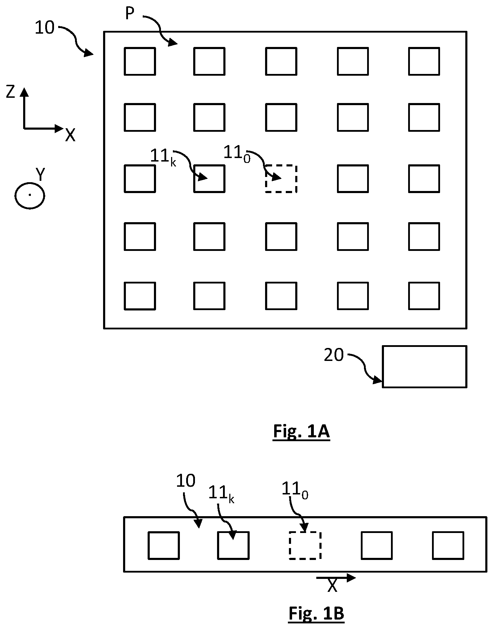

On a représenté, sur la figure 1A, une antenne acoustique planaire 10. Une telle antenne comporte des transducteurs acoustiques élémentaires $11_k$ répartis selon un plan d'antenne P. Les transducteurs élémentaires sont répartis selon le plan d'antenne, autour d'un transducteur de référence $11_0$. Le plan d'antenne P s'étend selon un axe longitudinal X, définissant des lignes, et un axe latéral Z, définissant des colonnes. Le plan d'antenne P est orthogonal à un axe Y. L'axe longitudinal X et l'axe latéral Z sont sécants, et de préférence perpendiculaires l'un par rapport à l'autre. L'antenne 10 comporte un axe principal $Y_0$, perpendiculaire au plan d'antenne P, et passant par le transducteur de référence $11_0$.

L'antenne 10 est reliée à une unité de traitement 20, par exemple de type processeur ou microprocesseur. L'unité de traitement 20 reçoit les signaux générés par chaque transducteur de l'antenne, par une liaison filaire ou une liaison sans fil. L'unité de traitement est configurée pour exécuter certaines étapes d'une calibration de l'antenne, en particulier lorsque ces étapes nécessitent des moyens de calcul.

Sur la figure 1B, on a représenté une antenne acoustique linéaire 10. Une telle antenne comporte des transducteurs élémentaires $11_k$ répartis selon une ligne parallèle à un axe longitudinal X. L'indice $k$ désigne chaque transducteur acoustique, $k$ étant un entier compris entre 0 et $K$, le nombre total de transducteurs acoustiques, y compris le transducteur de référence, étant égal à $K+1$ : 1 transducteur de référence, autour duquel s'étendent $K$ transducteurs élémentaires.

Le procédé de calibration décrit ci-après peut être appliqué selon une antenne 10 planaire ou linéaire telles que schématisées sur les figures 1A et 1B.

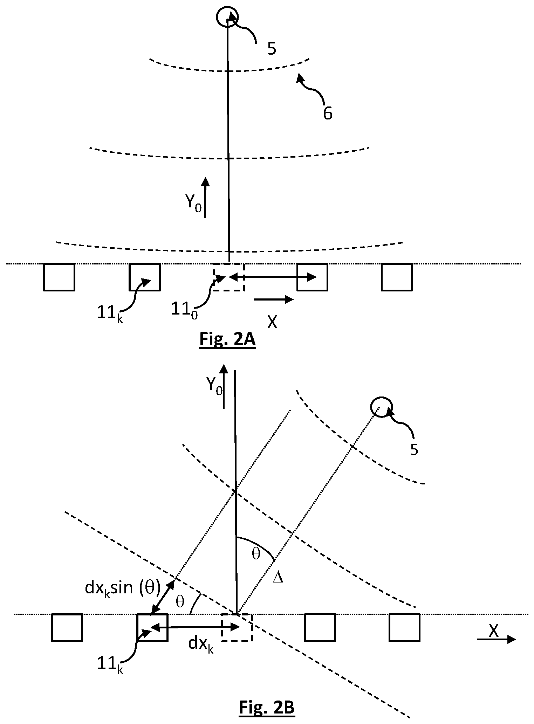

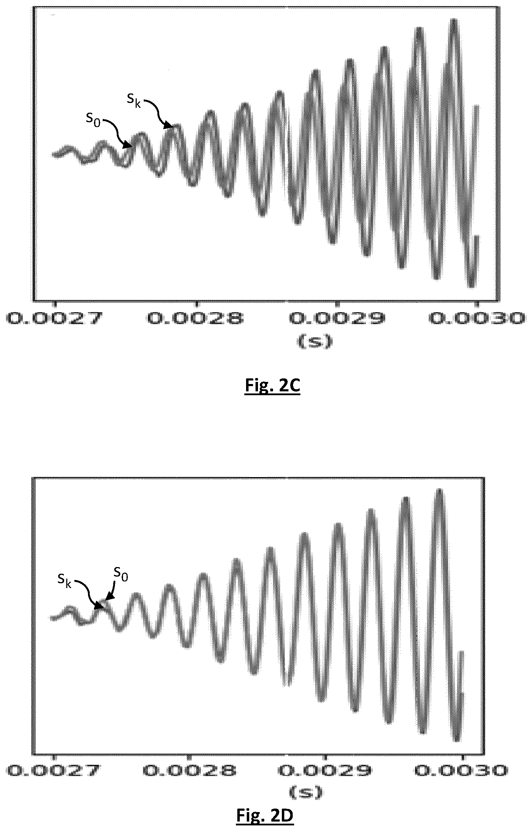

La figure 2A représente une source acoustique 5, dite source de calibration, disposée selon l'axe principal $Y_0$ d'une antenne 10. La source émet une onde acoustique de calibration 6, pouvant prendre une forme temporelle prédéterminée. Il peut par exemple s'agir d'une sinusoïde dont l'amplitude est modulée, dans le temps, par une fonction décroissante. L'onde acoustique de calibration 6 se propage vers l'antenne 10, sous la forme d'une onde plane. Sous l'effet de la détection de l'onde acoustique de calibration 6 émise par la source acoustique 5, les transducteurs de l'antenne 10 génèrent un signal de détection. La figure 2C schématise les signaux de détection $s_0$, $s_k$ respectivement enregistrés par le transducteur de référence $11_0$ et un transducteur élémentaire $11_k$ lui étant adjacent, les deux transducteurs étant alignés selon une même ligne. On observe un décalage temporel entre les deux signaux. Ce décalage est dû à un déphasage temporel entre le transducteur de référence $11_0$ et le transducteur élémentaire $11_k$. Chaque transducteur élémentaire $11_k$ est en effet affecté d'une phase $\Phi_k$, dite phase intrinsèque. La phase intrinsèque d'un transducteur élémentaire correspond à un décalage temporel $\Phi_k$ par rapport au transducteur de référence en présence d'une onde acoustique détectée simultanément par le transducteur considéré et le transducteur de référence. La phase $\Phi_0$ du transducteur de référence est arbitrairement considérée comme étant nulle. Ainsi, le déphasage entre un transducteur élémentaire et le transducteur de référence correspond à la phase $\Phi_k$ affectée au transducteur élémentaire.

La phase de chaque transducteur élémentaire $\Phi_k$ est fixe. Elle résulte de la variabilité de fabrication du transducteur, ou de la variabilité affectant les circuits électroniques de mise en forme du signal reliés au transducteur. Initialement, la phase $\Phi_k$ de chaque transducteur élémentaire est inconnue et peut être considérée comme aléatoirement distribuée. L'objectif de la calibration décrite ci-après est de l'estimer, de façon à améliorer la précision des mesures acoustiques effectuées à l'aide de l'antenne.

La figure 2D représente les signaux respectivement générés par le transducteur de référence et le transducteur considéré après calibration, c'est-à-dire prise en compte de la phase du transducteur $11_k$. On observe qu'après la calibration, les signaux sont synchrones.

Sur la figure 2C, on observe également que les amplitudes des signaux $s_0$ et $s_k$ sont différentes. Or, les transducteurs sont soumis à une onde acoustique spatialement uniforme. La disparité des amplitudes peut donc être attribuée à une variabilité dans la réponse des transducteurs considérés. Un autre objectif de la calibration est d'estimer un gain $g_k$ de chaque transducteur élémentaire, relativement au transducteur de référence, de façon à corriger les variations d'amplitude des signaux générés par les différents transducteurs d'une même antenne, en réponse à une onde acoustique d'amplitude uniforme. Sur la figure 2D, on observe que les amplitudes des signaux $s_0$ et $s_k$ sont similaires.

Ainsi, la calibration permet d'attribuer un gain et une phase à chaque transducteur élémentaire $11_k$, relativement au transducteur de référence, de telle sorte que :

$$s_k(t) = g_k s_0(t + \phi_k) \quad (1)$$

Où $s_k(t)$ et $s_0(t)$ sont respectivement les signaux de détection générés par le transducteur $11_k$ et le transducteur de référence $11_0$. La calibration permet alors de prendre en compte les variations d'amplitude et de temps de réponse de chaque transducteur.

La figure 2B représente une autre configuration de calibration, selon laquelle la source acoustique n'est pas centrée par rapport à l'axe principal de l'antenne, mais est disposée à distance de ce dernier. L'onde acoustique 6 atteint le plan d'antenne P en formant un angle d'incidence $\theta$ par rapport à l'axe X. Plus précisément, l'onde acoustique se propage selon un axe de propagation $\Delta$ formant l'angle d'incidence $\theta$ par rapport à l'axe X. Ainsi, chaque front d'onde atteint les différents transducteurs de l'antenne avec un décalage temporel induit par l'incidence oblique de l'onde acoustique de calibration. Si l'on considère que la détection de l'onde 6 par le transducteur de référence parvient à ce dernier à un instant de référence $t_0$, l'onde parvient à un transducteur, disposé sur la même ligne, à un instant :

$$t_k = t_0 + \frac{dx_k \sin\theta}{c} \quad (2)$$

où $dx_k$ correspond à la distance algébrique, selon l'axe longitudinal X, entre le transducteur $11_k$ considéré et le transducteur de référence $11_0$ et $c$ est la vitesse de propagation de l'onde acoustique. La distance algébrique est une distance affectée d'un signe, en fonction de la position du transducteur élémentaire considéré par rapport au transducteur de référence. Cela prend en compte le fait que certains transducteurs détectent l'onde acoustique en avance par rapport au transducteur de référence, auquel cas la distance $dx_k$ est négative, et d'autres transducteurs détectent l'onde acoustique en retard par rapport au transducteur de référence, auquel cas la distance $dx_k$ est positive.

Ainsi, l'émission du signal de détection est décalée, par rapport au signal de référence, selon un décalage temporel, positif ou négatif, égal à $\frac{dx_k \sin\theta}{c}$ , auquel s'ajoute le déphasage intrinsèque $\Phi_k$, ce dernier étant fixe et transducteur dépendant.

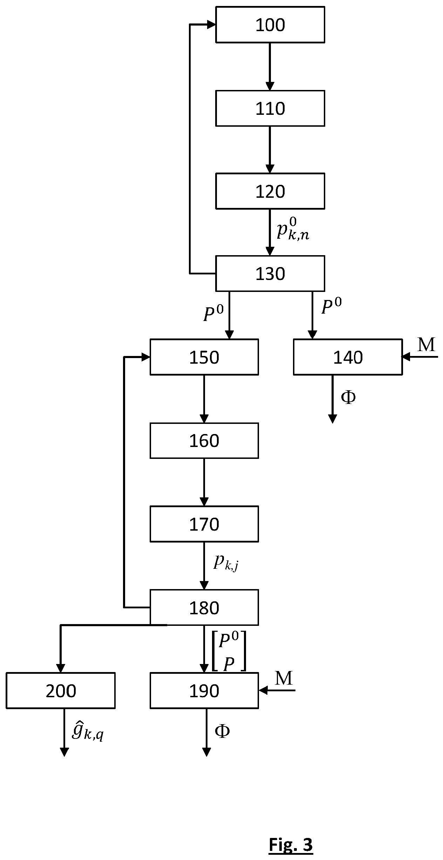

On va à présent décrire les principales étapes d'un procédé de calibration, en lien avec la figure 3.

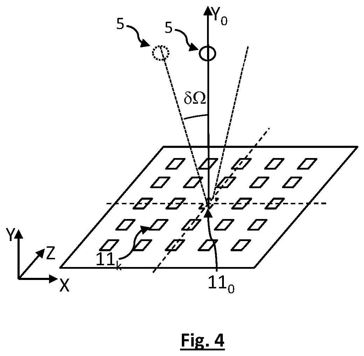

Etape 100 : disposition d'une source acoustique de calibration face à l'antenne 10, et plus précisément, le long de l'axe principal $Y_0$. Selon cette configuration, la source occupe une position $r_0$ centrée face à l'antenne, comme représenté sur la figure 4. Par le long de l'axe principal, on entend disposé sur l'axe principal $Y_0$ à une tolérance angulaire $\delta\Omega$ près, par exemple selon un angle inférieur à +/- 10° ou +/- 5° par rapport à l'axe $Y_0$. Il s'agit de l'angle formé par l'axe principal $Y_0$ et une droite reliant le transducteur de référence $11_0$ et la source de calibration. Durant cette étape, on peut utiliser un pointeur laser sur l'antenne, agencé pour émettre un faisceau lumineux selon l'axe principal $Y_0$ de l'antenne. Cela permet de faciliter un positionnement manuel de l'antenne le long de l'axe principal, ou dans un voisinage de l'antenne, c'est-à-dire à la tolérance angulaire $\delta\Omega$ près.

Etape 110 : Emission d'une onde acoustique de calibration 6 par la source de calibration 5 et acquisition de signaux générés par les transducteurs de l'antenne en réponse à l'onde acoustique de calibration. L'onde acoustique émise est de préférence impulsionnelle. La durée de l'impulsion est par exemple comprise entre 1 période et 10 périodes de l'onde, voire davantage. Par exemple, dans le cas d'une onde ultrasonore à la fréquence de 40KHz, la durée de l'impulsion peut être comprise entre 25 $\mu$s et 250 $\mu$s. L'onde acoustique de calibration peut être sinusoïdale, dont l'amplitude est modulée temporellement par une fenêtre d'apodisation, comme représenté sur les figures 2C et 2D.

Dans ce type de configuration, comme schématisé sur la figure 2A, l'onde acoustique atteint chaque transducteur de l'antenne en formant une onde plane. Chaque front d'onde est considéré comme atteignant simultanément les transducteurs. A la tolérance angulaire $\delta\Omega$ près, chaque déphasage affectant les signaux générés par les différents transducteurs élémentaires $11_k$ est uniquement dû à au déphasage intrinsèque $\Phi_k$ affectant chacun d'entre eux.

Etape 120 :

Détermination d'une différence de phase $p_{k,n}^0$ entre chaque signal $s_{k,n}$ généré par un transducteur élémentaire et le signal de référence $s_{0,n}$ généré par le transducteur de référence. Une telle différence de phase peut être déterminée par des moyens connus de l'homme du métier, par exemple une analyse fréquentielle de ces signaux, ou par analyse temporelle par corrélation. L'exposant 0 désigne le fait que la calibration est réalisée alors que la source de calibration 5 est centrée par rapport au transducteur de référence.

L'indice $n$ est un entier compris entre 1 et *N*. Il désigne le rang d'itération. *N* correspond au nombre d'itérations.

La différence de phase $p_{k,n}^0$ peut être modélisée par l'expression analytique suivante :

$$p_{k,n}^0 = \phi_k + \varepsilon^0 \quad (3)$$

Où $\varepsilon^0$ est un terme d'incertitude, de valeur moyenne nulle, traduisant l'incertitude quant à l'écart de la source de calibration par rapport à l'axe principal $Y_0$, ainsi que l'incertitude liée à la détermination de la différence de phase $p_{k,n}^0$.

Le terme $\varepsilon^0$ est explicité dans le détail dans la suite de la description (cf. étape 170).

Etape 130 :

Réitération des étapes 100 à 130. Entre chaque itération, la source de calibration peut être maintenue en une même position, ou bougée, sous réserve qu'elle soit considérée comme centrée, selon la définition indiquée dans l'étape 100. La réitération n'est pas indispensable, mais elle est avantageuse car elle permet de réduire l'incertitude de mesure, comme décrit ci-après. Les étapes 100 à 130 peuvent être réitérées selon un nombre d'itérations prédéterminé.

Etape 140 : Estimation de la phase des transducteurs.

A l'issue de l'étape 130, on dispose de *KxN* différences de phases $p_{k,n}^0$. En négligeant le terme de bruit $\varepsilon^0$, les différences de phase sont concaténées de façon à former un vecteur de déphasages mesurés $P^0$, de dimension (*KxN*, 1), de telle sorte que :

$$P^0 = \begin{bmatrix} p_{1,1}^0 \\ p_{2,1}^0 \\ \vdots \\ p_{K,1}^0 \\ p_{1,2}^0 \\ \vdots \\ p_{K,N}^0 \end{bmatrix} = \begin{bmatrix} I_K \\ \vdots \\ I_K \end{bmatrix} \cdot \begin{bmatrix} \phi_1 \\ \vdots \\ \phi_K \end{bmatrix} \quad (4)$$

où :

- . désigne le produit matriciel ;
- $I_K$ est une matrice identité de dimension (*K, K*) ;

- la matrice $M = \begin{bmatrix} I_K \\ \vdots \\ I_K \end{bmatrix}$ est une matrice de passage de dimension (*KxN, K*), résultant de la concaténation de *N* matrices identité $I_K$.

Soit $\Phi = \begin{bmatrix} \phi_1 \\ \vdots \\ \phi_K \end{bmatrix}$. Le vecteur $\Phi$ est un vecteur de dimension ($K$, 1), comportant les phases $\Phi_k$ de chaque transducteur. Il s'agit des inconnues.

La matrice $M$ est une matrice de passage, faisant le lien entre le vecteur des déphasages mesurés $P^0$ et le vecteur $\Phi$. Dans cette configuration, la matrice de passage est simplement constituée de $N$ matrices identité concaténées.

L'inversion de l'équation (3) permet d'obtenir une estimation du vecteur $\Phi$. L'estimation du vecteur $\Phi$ peut être obtenue selon un algorithme d'inversion matriciel connu de l'homme du métier.

Le fait d'effectuer plusieurs itérations des étapes 100 à 130 permet d'améliorer la précision avec laquelle les phases $\Phi_k$ sont déterminées, cette dernière évoluant en fonction de $\sqrt{N}$.

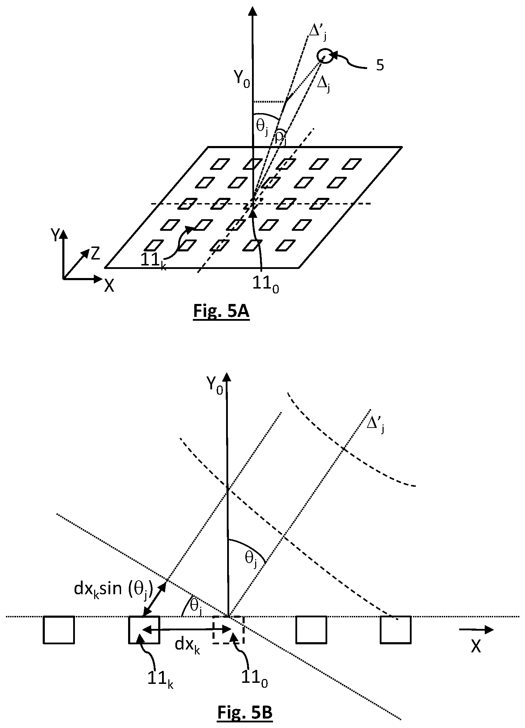

Selon un mode de réalisation préféré, la source de calibration 5 est également utilisée de façon décentrée, c'est-à-dire à distance de l'axe principal $Y_0$, comme représenté sur la figure 5A. Selon ce mode de réalisation, les étapes 100 à 130 sont effectuées en utilisant la source de calibration considérée comme centrée. Suite à l'étape 130, la source de calibration est disposée à distance de l'axe principal $Y_0$. Le procédé se poursuit alors selon les étapes suivantes.

Etape 150 : disposition de la source de calibration face à l'antenne 10, à distance de l'axe principal $Y_0$. La source est disposée selon position décentrée $r_j$ (i-e à distance de l'axe principal). L'index $j$ désigne un rang d'itération des étapes 150 à 180. $j$ est un entier compris entre 1 et $J$. $J$ correspond au nombre d'itérations effectuées alors que la source est décentrée. Une des particularités du procédé est qu'il n'est pas nécessaire de connaître la position $r_j$. Cet aspect est détaillé par la suite, en lien avec l'étape 180.

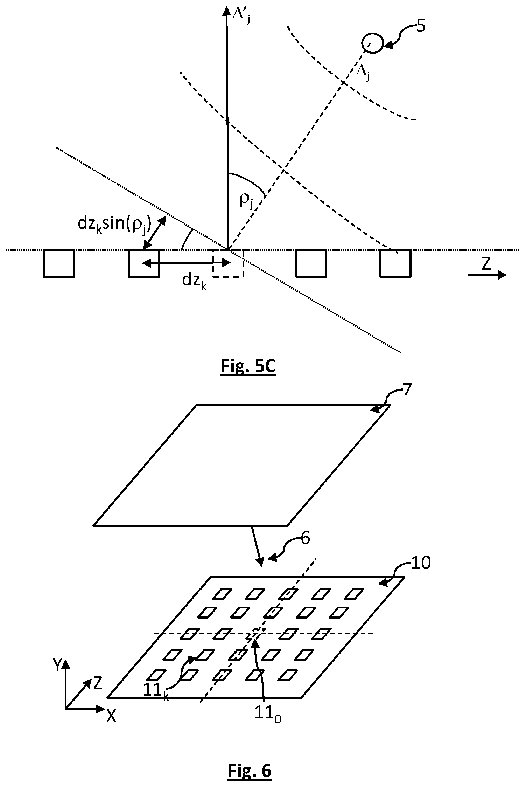

Etape 160 : émission d'une onde acoustique de calibration 6 par la source de calibration et acquisition de signaux générés par les transducteurs de l'antenne en réponse à l'onde acoustique de calibration. L'onde acoustique de calibration est de préférence telle que décrite en lien avec l'étape 110. Du fait du décentrage de la source de calibration par rapport à l'axe principal $Y_0$ de l'antenne, chaque front d'onde se propage vers l'antenne parallèlement à un axe de propagation $\Delta_j$ incliné par rapport au plan d'antenne. L'axe de propagation $\Delta_j$ correspond à l'axe s'étendant entre la source de calibration 5, placée selon la position $r_j$ et le transducteur de référence $11_0$. L'inclinaison de l'axe de propagation $\Delta_j$ peut être matérialisée par deux angles d'inclinaison. Par exemple, comme représenté sur les figures 5A, 5B et 5C, l'onde acoustique de calibration se propage vers l'antenne de telle sorte que l'onde forme :

- un premier angle $\theta_j$ entre l'axe principal $Y_0$ et une projection $\Delta'_j$ de l'axe de propagation $\Delta_j$ dans un plan comportant l'axe principal $Y_0$ et l'axe longitudinal X.
- un deuxième angle $\rho_j$ entre l'axe de propagation $\Delta_j$ et la projection $\Delta'_j$ de ce dernier dans le plan ($Y_0$, X).

Le premier angle $\theta_j$ correspond à une inclinaison de l'axe de propagation $\Delta_j$, l'inclinaison étant projetée dans un plan passant par l'axe principal $Y_0$ et l'axe longitudinal X. Le deuxième angle $\rho_j$ correspond à une inclinaison de l'axe de propagation $\Delta_j$, l'inclinaison étant projetée dans un plan passant par la projection $\Delta'_j$ et l'axe latéral Z.

Etape 170 :

L'étape 170 comporte une détermination d'une différence de phase $p_{k,j}$ entre chaque signal $s_{k,j}$ généré par un transducteur élémentaire et le signal de référence $s_{0,j}$ généré par le transducteur de référence alors que la source occupe une position $r_j$.

La différence de phase $p_{k,j}$ peut être modélisée par l'expression analytique suivante :

$$p_{k,j} = \phi_k + \frac{dx_k}{c}\sin(\theta_j) + \frac{dz_k}{c}\sin(\rho_j)\cos(\theta_j) + \varepsilon \quad (6)$$

$dx_k$ et $dz_k$ correspondent aux distances entre chaque transducteur $11_k$ et le transducteur de référence $11_0$, les distances étant respectivement calculées selon l'axe longitudinal X et l'axe latéral Z.

Le terme $\varepsilon$ est un terme de bruit, dont la valeur moyenne est considérée comme nulle. On peut considérer que $\varepsilon$ suit une loi normale de moyenne nulle et de variance $\sigma^2$. Ce terme prend en compte les incertitudes dans l'estimation de la différence de phase $p_{k,j}$.

Lorsque les angles $\theta_j$ et $\rho_j$ sont faibles, c'est-à-dire lorsque la position de la source de calibration est considérée comme centrée, l'expression (6) tend vers l'expression (3). En effet, aux faibles angles,

$$p_{k,j} = \phi_k + \frac{dx_k}{c}\theta_j + \frac{dz_k}{c}\theta_j + \varepsilon \cong \phi_k + \varepsilon^0 \quad (6')$$

Les angles $\theta_j$ et $\rho_j$ suivent une loi normale de moyenne nulle et de variance $\sigma_0^2$

Le terme d'erreur $\varepsilon^0$ suit une loi normale de moyenne nulle et de variance égale à

$$\frac{dx_k^2 + dz_k^2}{c^2}\sigma_0^2 + \sigma^2$$

Etape 180

Réitération des étapes 150 à 170. Entre chaque itération, la source de calibration peut être maintenue en une même position, ou bougée. La réitération permet de réduire l'incertitude de mesure, comme décrit ci-après.
Etape 190 : Estimation de la phase des transducteurs.
A l'issue de l'étape 180, on dispose de :

- $KxN$ différences de phases $p_{k,n}^0$ , obtenues lors des itérations des étapes 100 à 120 ;
- $KxJ$ différences de phases $p_{k,j}$, obtenues lors des itérations des étapes 150 à 170.

En négligeant le terme $\varepsilon$, les $KxJ$ différences de phases $p_{k,j}$ peuvent être concaténées de façon à former un vecteur $P$, de dimension ($KxJ$, 1), de telle sorte que :

$$P = \begin{bmatrix} p_{1,1} \\ p_{2,1} \\ \vdots \\ p_{K,1} \\ p_{1,2} \\ \vdots \\ p_{K,J} \end{bmatrix} = \begin{bmatrix} I_K & D_1(\frac{\mathbf{x}}{\mathbf{c}}) & D_1(\frac{\mathbf{x}}{\mathbf{c}}) \\ \vdots & \vdots & \vdots \\ I_K & D_J(\frac{\mathbf{z}}{\mathbf{c}}) & D_J(\frac{\mathbf{z}}{\mathbf{c}}) \end{bmatrix} \cdot \begin{bmatrix} \phi_1 \\ \vdots \\ \phi_K \\ \sin(\theta_1) \\ \vdots \\ \sin(\theta_J) \\ \sin(\rho_1) \\ \vdots \\ \sin(\rho_J) \end{bmatrix} \quad (7)$$

$$F = \begin{bmatrix} I_K & D_1(\frac{\mathbf{x}}{\mathbf{c}}) & D_1(\frac{\mathbf{x}}{\mathbf{c}}) \\ \vdots & \vdots & \vdots \\ I_K & D_J(\frac{\mathbf{z}}{\mathbf{c}}) & D_J(\frac{\mathbf{z}}{\mathbf{c}}) \end{bmatrix} \text{ est une matrice de dimension } (KxJ,\ K+J+J).$$

La matrice F est obtenue par une concaténation de matrices identités $I_K$ ainsi que de matrices $D_j$, de dimension ($K$, $J$) comportant que des 0, hormis au niveau de la j$^{\text{ième}}$ colonne.
Ainsi, chaque matrice $D_j$ est telle que :

$$D_j\left(\frac{\mathbf{x}}{c}\right) = \begin{bmatrix} 0 & \frac{dx_1}{c} & 0 \\ \vdots & \vdots & \vdots \\ 0 & \frac{dx_K}{c} & 0 \end{bmatrix} \text{ et } D_j\left(\frac{\mathbf{z}}{c}\right) = \begin{bmatrix} 0 & \frac{dz_1}{c} & 0 \\ \vdots & \vdots & \vdots \\ 0 & \frac{dz_K}{c} & 0 \end{bmatrix}$$

Le vecteur $a = \begin{bmatrix} \phi_1 \\ \vdots \\ \phi_K \\ \sin(\theta_1) \\ \vdots \\ \sin(\theta_J) \\ \sin(\rho_1) \\ \vdots \\ \sin(\rho_J) \end{bmatrix}$ comporte les inconnues, c'est-à-dire les déphasages $\Phi_k$ de chaque transducteur

élémentaire, ainsi que les angles $\theta_j$, $\rho_j$ formé par l'onde émise par la source de calibration lors de chaque itération des étapes 150 à 180. La dimension du vecteur *a* est (*K+J+J*,1). On peut remarquer que

$$a = \begin{bmatrix} \Phi \\ \sin(\theta_1) \\ \vdots \\ \sin(\theta_J) \\ \sin(\rho_1) \\ \vdots \\ \sin(\rho_J) \end{bmatrix}$$

avec : $\Phi = \begin{bmatrix} \phi_1 \\ \vdots \\ \phi_K \end{bmatrix}$

Les expressions (3) et (6) peuvent être exprimées de façon matricielle selon l'expression :

$$\begin{bmatrix} P^0 \\ P \end{bmatrix} = \begin{bmatrix} F^0 \\ F \end{bmatrix} a + \begin{bmatrix} E^0 \\ E \end{bmatrix} \quad (7)$$

avec

$$F^0 = \begin{bmatrix} I_K & 0_{K,2J} \\ \vdots & \vdots \\ I_K & 0_{K,2J} \end{bmatrix}$$

La matrice $F^0$, de taille (*K*, *K + J+ J*) est formée par une concaténation de matrices identité $I_K$ et de matrices $0_{K, 2J}$. Chaque matrice $0_{K, 2J}$ est de dimension (*K, 2J*), et ne comporte que des 0.

Selon ce mode de réalisation, la matrice $M = \begin{bmatrix} F^0 \\ F \end{bmatrix}$ est une matrice de passage entre le vecteur des déphasages mesurés $\begin{bmatrix} P^0 \\ P \end{bmatrix}$ et le vecteur *a*, ce dernier comportant le vecteur des phases $\Phi$. Ainsi, selon ce mode de réalisation, la matrice de passage *M* comporte les distances $dx_k$ et $dz_k$ respectives de chaque transducteur par rapport au transducteur de référence. Les distances sont normalisées par la vitesse de propagation *c* de l'onde acoustique.

Le vecteur $\begin{bmatrix} P^0 \\ P \end{bmatrix}$ résulte de la concaténation des vecteurs $P^0$ et *P*. Sa dimension est (*KxN+KxJ,* 1)

Le vecteur $\begin{bmatrix} E^0 \\ E \end{bmatrix}$ est de dimension (*KxN+KxJ,* 1). Il est formé d'une concaténation :

- d'un vecteur $E^0$, de dimension (*KxN,1),* suivant une loi normale multidimensionnelle de dimension *KxN,* paramétrée par un vecteur moyenne $\mu^0$, de dimension (*KxN, 1)* dont chaque terme est nul, ainsi que par une matrice de variance covariance $\Sigma$, de dimension (*KxN, KxN).* Il est également possible de considérer, à la place de la loi normale, une loi de Student.
- d'un vecteur E, de dimension (*KxJ,1)*, suivant une loi normale multidimensionnelle de dimension *KxJ,* paramétrée par un vecteur moyenne $\mu$, de dimension (*KxJ,1)* dont chaque terme est nul, ainsi que par une matrice de variance covariance $\sigma I_{KJ}$, de dimension (*KxJ, KxJ),* où $I_{KJ}$ est une matrice identité de dimension (*KxJ, KxJ).*

Il est possible d'estimer un vecteur *â* satisfaisant à l'équation (7) en mettant en œuvre un algorithme d'inversion. Par exemple, le vecteur *â* peut être estimé par une méthode de type moindres carrés, selon l'expression :

$$\hat{a} = \left( F^{0^T} \Sigma^{-1} F^0 + \sigma^{-2} F^T F \right)^{-1} \left( F^{0^T} \Sigma^{-1} P^0 + \sigma^{-2} F^T P \right) \quad (8)$$

où:

- $\Sigma$ est une matrice diagonale, de taille $(K, K)$ chaque terme de la diagonale comportant des variances $\sigma_k$ issues des mesures de déphasage résultant de l'étape 170;

- Chaque variance $\sigma_k$ de la matrice $\Sigma$ est calculée à l'aide de l'équation : $\frac{dx_k{}^2 + dz_k{}^2}{c^2}\sigma_0{}^2 + \sigma^2$ .

Le terme $\sigma^2$ est un scalaire exprimé en unité de temps, et représente la précision de l'estimateur de phase décrit en lien avec l'étape 170. Si, au cours de cette étape, le signal est échantillonné selon une période d'échantillonnage $T_e$, $\sigma$ peut être tel que : $\sigma = T_e$ lorsque l'estimateur est considéré comme précis. Il peut être tel que $\sigma = 20\,T_e$ lorsque l'estimateur est considéré comme moins précis. La période d'échantillonnage $T_e$ correspond à l'inverse de la fréquence d'échantillonnage.

Ainsi, le formalisme décrit en lien avec l'équation (7) permet une estimation $\hat{a}$ par une méthode simple, par exemple de type moindres carrés (cf. (8)). De façon alternative à la mise en œuvre d'un algorithme d'inversion matricielle, le vecteur $\hat{a}$ peut être estimé par une décomposition de Cholesky appliquée à la matrice $F^{0T}\Sigma^{-1}F^0 + \sigma^{-2}\,F^TF$ , qui est symétrique et définie positive. Selon une telle décomposition, la matrice $F^{0T}\Sigma^{-1}F^0 + \sigma^{-2}F^TF$ peut être décomposée en déterminant une matrice de décomposition L telle que :

$$LL^T = F^{0T}\Sigma^{-1}F^0 + \sigma^{-2}F^TF \quad (9)$$

$L$ est une matrice triangulaire, pouvant être préalablement déterminée, moyennant une prise en compte des valeurs de $\Sigma$, $\sigma$ et de $\sigma_0$. $L$ peut par exemple être stockée, dans une mémoire de l'unité de traitement 20, cette dernière pouvant être embarquée. On peut alors aisément estimer $a$ en résolvant l'équation :

$$L^Tb = F^{0T}\Sigma^{-1}P^0 + \sigma^{-2}F^TP \quad (10)$$

puis estimer $\hat{a}$ tel que :

$$L^T\hat{a} = b \quad (11)$$

Quel que soit le mode de réalisation, l'estimation $\hat{a}$ permet d'obtenir une estimation du vecteur $\Phi$, comportant les phases $\Phi_k$ recherchées.

A la suite de l'étape 190, on dispose d'une estimation de la phase $\Phi_k$ de chaque transducteur. Il est alors possible de tenir compte de cette dernière pour corriger les signaux $s_k(t)$ respectivement générés par chaque transducteur.

On constate que lors de la mise en œuvre des étapes 150 à 180, il n'est pas nécessaire de connaître la position $r_j$ de la source. Cela est dû au fait que les angles d'incidence $\theta_j$ et $\rho_j$ sont des inconnues estimées par le procédé. Cela permet d'effectuer une calibration particulièrement aisée de l'antenne.

Par ailleurs, entre plusieurs itérations successives, la source de calibration peut être disposée selon une même position. Ainsi, deux positions $r_j$, $r_{j+1}$ ne sont pas forcément différentes l'une de l'autre.

Etape 200 : Calibration du gain

Comme précédemment mentionné, chaque transducteur $11_k$ présente un gain $g_k$ conditionnant l'amplitude du signal $s_k$ généré. Les signaux mesurés au cours de la procédure de calibration précédemment décrite peuvent être utilisés pour estimer le gain $g_k$.

Soit q, un indice décrivant les $N$ signaux générés par un transducteur élémentaire $11_k$ durant les étapes 110 à 130 ainsi que les $J$ signaux générés par le même transducteur élémentaire durant les étapes 150 à 170 : $1 \leq q \leq N+J$. Le gain du transducteur élémentaire peut être estimé en comparant une moyenne des signaux $s_{k,q}$ successivement générés par le transducteur considéré avec une moyenne des signaux $s_{0,q}$ successivement générés par le transducteur de référence.

$$\hat{g}_{k,q} = \frac{1}{N+J}\sum_{q=1}^{N+J}\frac{\int|s_{k,q}(t)|dt}{|s_{0,q}(t)|dt} \quad (13)$$

Selon un mode de réalisation, au moins un transducteur de l'antenne est configuré pour être activé, de façon à émettre une onde acoustique de calibration. Il peut notamment s'agir du transducteur de référence. Le procédé décrit ci-avant peut être mis en œuvre en disposant un réflecteur 7 face à l'antenne. Le réflecteur 7 est agencé pour réfléchir l'onde acoustique, émise par le transducteur, vers l'antenne.

L'onde acoustique réfléchie par le réflecteur 7 constitue alors l'onde acoustique de calibration 6. L'orientation du réflecteur 7 par rapport à l'antenne 10 peut être modifiée, de façon à faire varier les angles d'incidence $\theta$ et $\rho$ par rapport au plan d'antenne. Ainsi, le réflecteur agit comme une source de calibration 5. En modifiant la position de la source de calibration, qui correspond dans ce cas à une orientation du réflecteur, on peut obtenir différentes incidences de l'onde acoustique de calibration 6 se propageant vers l'antenne. Lorsque le réflecteur s'étend parallèlement à l'antenne, on se trouve dans une configuration centrée, l'onde acoustique de calibration atteignant le plan d'antenne en formant des fronts d'onde parallèles à ce dernier. On se trouve alors dans une configuration telle que décrite en lien avec les étapes 100 à 130. Lorsque l'inclinaison du réflecteur est modifiée par rapport au plan d'antenne, on se trouve dans une configuration telle que décrite en lien avec les étapes 150 à 180.

L'invention permet de réaliser une calibration d'une antenne acoustique à l'aide des moyens simples, sans nécessiter un positionnement précis de la source de calibration par rapport à l'antenne.

**Revendications**

1. Procédé de calibration d'une antenne acoustique (10), l'antenne acoustique comportant une pluralité de transducteurs ($11_0, 11_k$), chaque transducteur k, avec k = 0,1, ..., K, étant apte à générer un signal électrique $s_k$ sous l'effet d'une détection d'une onde acoustique, l'antenne comportant des transducteurs élémentaires ($11_k$) répartis selon une ligne d'antenne ou un plan d'antenne, autour d'un transducteur de référence ($11_0$), l'antenne définissant un axe principal ($Y_0$), passant par le transducteur de référence, et perpendiculaire à la ligne d'antenne ou au plan d'antenne, le procédé comportant les étapes suivantes :

   a) disposition d'une source de calibration (5) en au moins une position par rapport à l'antenne, la source de calibration étant apte à émettre une onde acoustique de calibration (6) se propageant vers l'antenne ;
   b) mesure des signaux $s_k$ générés par tout ou partie des transducteurs élémentaires en réponse à l'onde acoustique de calibration ;
   c) à partir des mesures effectuées lors de l'étape b), détermination d'un déphasage temporel ($p^0_{k,n}, p_{k,j}$) du signal respectivement généré par chaque transducteur élémentaire, chaque déphasage temporel étant déterminé par rapport à un signal de référence ($s_0$) généré par le transducteur de référence ;
   d) réitération des étapes a) à c), de telle sorte que lors d'au moins une itération, la position de la source de calibration est considérée comme centrée sur l'axe principal ;
   le procédé comportant une estimation d'un déphasage, dit déphasage intrinsèque, de chaque transducteur élémentaire par rapport au transducteur de référence, l'estimation du déphasage comportant :

      e) concaténation des déphasages temporels déterminés lors de chaque étape c), de façon à former un
      vecteur de déphasages mesurés ( $P^0, \begin{bmatrix} P^0 \\ P \end{bmatrix}$ );
      f) prise en compte d'une matrice de passage ($M$);
      g) à partir de la matrice de passage ($M$) et du vecteur de déphasages mesurés, estimation d'un déphasage de chaque transducteur élémentaire par rapport au transducteur de référence.

   le procédé étant tel que la matrice de passage comporte :

      - des distances respectives ($dx_k, dz_k$), entre le transducteur de référence et chaque transducteur élémentaire ;
      - ou une concaténation d'un nombre de matrices identité ($I_k$) égal au nombre d'itérations (N) effectuées, la source de calibration étant centrée par rapport à l'axe principal, la dimension de chaque matrice identité correspondant au nombre de transducteurs élémentaires ($K$) dont on souhaite déterminer le déphasage.

2. Procédé selon la revendication 1, dans lequel l'antenne s'étend selon un axe longitudinal (X), et dans lequel au moins une itération des étapes a) à c) est mise en œuvre en disposant la source de calibration selon une position en dehors de l'axe principal ($Y_0$), de telle sorte que l'onde acoustique (6) émise par la source de calibration (5) se propage vers le transducteur de référence en formant un premier angle ($\theta_j$) par rapport à l'axe longitudinal, le procédé étant tel que :

      - lors de l'étape f), la matrice de passage comporte les distances respectives ($dx_k$), selon l'axe longitudinal, entre le transducteur de référence et chaque transducteur élémentaire;
- l'étape g) comporte une estimation du premier angle ($\theta_j$).

3. Procédé selon la revendication 2, dans lequel dans la matrice de passage ($M$), les distances entre le transducteur de référence et chaque transducteur élémentaire, selon l'axe longitudinal, sont normalisées par une vitesse de propagation de l'onde acoustique.

4. Procédé selon la revendication 2 ou la revendication 3, dans lequel l'antenne s'étend également selon un axe latéral ($Z$), sécant de l'axe longitudinal ($X$), de telle sorte que l'onde acoustique émise par la source de calibration se propage vers le transducteur de référence en formant un deuxième angle ($\rho_j$) par rapport à l'axe latéral ($Z$), le procédé étant tel que:

- lors de l'étape f), la matrice de passage ($M$) comporte les distances respectives ($dz_k$), selon l'axe latéral, entre le transducteur de référence et chaque transducteur élémentaire;
- l'étape g) comporte une estimation du deuxième angle ($\rho_j$).

5. Procédé selon la revendication 4, dans lequel dans la matrice de passage ($M$), les distances entre le transducteur de référence et chaque transducteur élémentaire, selon l'axe latéral, sont normalisées par une vitesse de propagation de l'onde acoustique.

6. Procédé selon l'une quelconque des revendications précédentes, dans lequel :

- les itérations des étapes a) à c) sont répétées, la source de calibration étant centrée par rapport à l'axe principal ;
- la matrice de passage ($M$) comporte une concaténation d'un nombre de matrices identité ($I_k$) égal au nombre d'itérations ($N$) effectuées, la dimension de chaque matrice identité correspondant au nombre de transducteurs élémentaires ($K$) dont on souhaite déterminer le déphasage.

7. Procédé selon l'une quelconque des revendications précédentes, dans lequel les itérations des étapes a) à c) sont répétées plusieurs fois pour au moins une même position de la source de calibration.

8. Procédé selon l'une quelconque des revendications précédentes, comportant, pour tout ou partie des transducteurs élémentaires, une étape h) d'émission d'une onde acoustique vers l'antenne, et d'une comparaison des signaux ($s_k$, $s_0$) respectivement générés par chaque transducteur élémentaire et par le transducteur de référence en réponse à l'onde acoustique émise, de façon à assigner un gain ($g_k$) à chaque transducteur élémentaire à partir de la comparaison.

9. Procédé selon la revendication 8, dans lequel la comparaison est un ratio entre les intégrales respectives des valeurs absolues des signaux ($s_k$, $s_0$) respectivement généré par chaque transducteur élémentaire et par le transducteur de référence.

10. Procédé selon l'une quelconque des revendications précédentes, dans lequel les étapes e) à g) sont mises en œuvre par une unité de traitement (20), reliée aux transducteurs de l'antenne.

11. Procédé selon l'une quelconque des revendications précédentes, dans lequel un transducteur de l'antenne génère une onde acoustique vers un réflecteur (7), disposé face à l'antenne, de telle sorte que l'onde acoustique réfléchie par le réflecteur forme l'onde acoustique de calibration.

12. Antenne acoustique (10), comportant une pluralité de transducteurs ($11_0$, $11_k$), chaque transducteur étant apte à générer un signal électrique ($s_k$) sous l'effet d'une détection d'une onde acoustique, l'antenne comportant des transducteurs élémentaires ($11_k$) répartis selon une ligne d'antenne ou un plan d'antenne, autour d'un transducteur de référence ($11_0$), l'antenne définissant un axe principal ($Y_0$), passant par le transducteur de référence, et perpendiculaire à la ligne d'antenne ou au plan d'antenne, l'antenne comportant une unité de traitement (20), configurée pour mettre en œuvre les étapes c) à g) d'un procédé selon l'une quelconque des revendications précédentes, à partir d'une mesure de signaux générés par tout ou partie des transducteurs élémentaires en réponse à une onde acoustique de calibration émise par une source acoustique de calibration disposée face à l'antenne.

**Patentansprüche**

1. Verfahren zum Kalibrieren einer akustischen Antenne (10), wobei die akustische Antenne eine Vielzahl von Wandlern ($11_0$, $11_k$) umfasst, wobei jeder Wandler k, mit k = 0,1, ..., K, in der Lage ist, ein elektrisches Signal $s_k$ unter der Wirkung einer Detektion einer akustischen Welle zu erzeugen, wobei die Antenne Elementarwandler ($11_k$) umfasst, die entlang einer Antennenlinie oder einer Antennenebene um einen Referenzwandler ($11_0$) herum verteilt sind, wobei die Antenne eine Hauptachse ($Y_0$) definiert, die durch den Referenzwandler verläuft und senkrecht zu der Antennenlinie oder Antennenebene ist, wobei das Verfahren die folgenden Schritte umfasst:

   a) Anordnen einer Kalibrierungsquelle (5) an mindestens einer Position in Bezug auf die Antenne, wobei die Kalibrierungsquelle in der Lage ist, eine akustische Kalibrierungswelle (6) zu emittieren, die sich zu der Antenne hin ausbreitet;
   b) Messen der Signale $s_k$, die von allen oder einem Teil der Elementarwandler als Reaktion auf die akustische Kalibrierungswelle erzeugt werden;
   c) ausgehend von den beim Schritt b) durchgeführten Messungen, Bestimmen einer zeitlichen Phasenverschiebung ($p^0_{k,n}$, $p_{k,j}$) des von jedem Elementarwandler jeweils erzeugten Signals, wobei jede zeitliche Phasenverschiebung in Bezug auf ein Referenzsignal ($s_0$) bestimmt wird, das von dem Referenzwandler erzeugt wird;
   d) Reiteration der Schritte a) bis c), so dass bei mindestens einer Iteration die Position der Kalibrierungsquelle als auf die Hauptachse zentriert betrachtet wird;
   wobei das Verfahren ein Schätzen einer Phasenverschiebung, intrinsische Phasenverschiebung genannt, jedes Elementarwandlers in Bezug auf den Referenzwandler umfasst, wobei das Schätzen der Phasenverschiebung umfasst:

   e) Verketten der bei jedem Schritt c) bestimmten zeitlichen Phasenverschiebungen, so dass ein Vektor gemessener Phasenverschiebungen ( $P^0$, $\begin{bmatrix} P^0 \\ P \end{bmatrix}$ ) gebildet wird;
   f) Berücksichtigen einer Übergangsmatrix (M);
   g) ausgehend von der Übergangsmatrix (M) und von dem Vektor gemessener Phasenverschiebungen, Schätzen einer Phasenverschiebung jedes Elementarwandlers in Bezug auf den Referenzwandler;

   wobei das Verfahren derart ist, dass die Übergangsmatrix umfasst:

   - jeweilige Abstände ($dx_k$, $dz_k$) zwischen dem Referenzwandler und jedem Elementarwandler;
   - oder eine Verkettung einer Anzahl von Identitätsmatrizen ($I_k$) gleich der Anzahl von durchgeführten Iterationen (N), wobei die Kalibrierungsquelle in Bezug auf die Hauptachse zentriert ist, wobei die Dimension jeder Identitätsmatrix der Anzahl von Elementarwandlern (K), deren Phasenverschiebung bestimmt werden soll, entspricht.

2. Verfahren nach Anspruch 1, wobei sich die Antenne entlang einer Längsachse (X) erstreckt und wobei mindestens eine Iteration der Schritte a) bis c) durchgeführt wird, indem die Kalibrierungsquelle gemäß einer Position außerhalb der Hauptachse ($Y_0$) angeordnet wird, so dass sich die von der Kalibrierungsquelle (5) emittierte akustische Welle (6) zu dem Referenzwandler hin unter Bildung eines ersten Winkels ($\theta_j$) in Bezug auf die Längsachse ausbreitet, wobei das Verfahren derart ist, dass:

   - bei dem Schritt f) die Übergangsmatrix die jeweiligen Abstände ($dx_k$) entlang der Längsachse zwischen dem Referenzwandler und jedem Elementarwandler umfasst;
   - der Schritt g) ein Schätzen des ersten Winkels ($\theta_j$) umfasst.

3. Verfahren nach Anspruch 2, wobei in der Übergangsmatrix (M) die Abstände zwischen dem Referenzwandler und jedem Elementarwandler entlang der Längsachse durch eine Ausbreitungsgeschwindigkeit der akustischen Welle normalisiert werden.

4. Verfahren nach Anspruch 2 oder Anspruch 3, wobei sich die Antenne auch entlang einer lateralen Achse (Z) erstreckt, die die Längsachse (X) schneidet, so dass sich die von der Kalibrierungsquelle emittierte akustische Welle zu dem Referenzwandler hin unter Bildung eines zweiten Winkels ($\rho_j$) in Bezug auf die laterale Achse (Z) ausbreitet, wobei das Verfahren derart ist, dass:

- bei dem Schritt f) die Übergangsmatrix (M) die jeweiligen Abstände ($dz_k$) entlang der lateralen Achse zwischen dem Referenzwandler und jedem Elementarwandler umfasst;
- der Schritt g) ein Schätzen des zweiten Winkels ($\rho_j$) umfasst.

5. Verfahren nach Anspruch 4, wobei in der Übergangsmatrix (M) die Abstände zwischen dem Referenzwandler und jedem Elementarwandler entlang der lateralen Achse durch eine Ausbreitungsgeschwindigkeit der akustischen Welle normalisiert werden.

6. Verfahren nach einem der vorhergehenden Ansprüche, wobei:

   - die Iterationen der Schritte a) bis c) wiederholt werden, wobei die Kalibrierungsquelle in Bezug auf die Hauptachse zentriert ist;
   - die Übergangsmatrix (M) eine Verkettung einer Anzahl von Identitätsmatrizen ($I_k$) gleich der Anzahl der durchgeführten Iterationen (N) umfasst, wobei die Dimension jeder Identitätsmatrix der Anzahl von Elementarwandlern (K), deren Phasenverschiebung bestimmt werden soll, entspricht.

7. Verfahren nach einem der vorhergehenden Ansprüche, wobei die Iterationen der Schritte a) bis c) für mindestens eine selbe Position der Kalibrierungsquelle mehrmals wiederholt werden.

8. Verfahren nach einem der vorhergehenden Ansprüche, umfassend für alle oder einen Teil der Elementarwandler einen Schritt h) des Emittierens einer akustischen Welle zu der Antenne hin und ein Vergleichen der Signale ($s_k$, $s_0$), die von jedem Elementarwandler und von dem Referenzwandler jeweils als Reaktion auf die emittierte akustische Welle erzeugt werden, so dass jedem Elementarwandler ausgehend von dem Vergleich eine Verstärkung ($g_k$) zugewiesen wird.

9. Verfahren nach Anspruch 8, wobei der Vergleich ein Verhältnis zwischen den jeweiligen Integralen der Absolutwerte der Signale ($s_k$, $s_0$) ist, die von jedem Elementarwandler und von dem Referenzwandler jeweils erzeugt werden.

10. Verfahren nach einem der vorhergehenden Ansprüche, wobei die Schritte e) bis g) von einer Verarbeitungseinheit (20) durchgeführt werden, die mit den Wandlern der Antenne verbunden ist.

11. Verfahren nach einem der vorhergehenden Ansprüche, wobei ein Wandler der Antenne eine akustische Welle zu einem Reflektor (7) hin erzeugt, der gegenüber der Antenne angeordnet ist, so dass die von dem Reflektor reflektierte akustische Welle die akustische Kalibrierungswelle bildet.

12. Akustische Antenne (10), umfassend eine Vielzahl von Wandlern ($11_0$, $11_k$), wobei jeder Wandler in der Lage ist, unter der Wirkung einer Detektion einer akustischen Welle ein elektrisches Signal ($s_k$) zu erzeugen, wobei die Antenne Elementarwandler ($11_k$) umfasst, die entlang einer Antennenlinie oder einer Antennenebene um einen Referenzwandler ($11_0$) herum verteilt sind, wobei die Antenne eine Hauptachse ($Y_0$) definiert, die durch den Referenzwandler verläuft und senkrecht zu der Antennenlinie oder Antennenebene ist, wobei die Antenne eine Verarbeitungseinheit (20) umfasst, die dazu ausgelegt ist, die Schritte c) bis g) eines Verfahrens nach einem der vorhergehenden Ansprüche ausgehend von einer Messung von Signalen durchzuführen, die von allen oder einem Teil der Elementarwandler als Reaktion auf eine von einer gegenüber der Antenne angeordneten akustischen Kalibrierungsquelle emittierte akustische Kalibrierungswelle erzeugt werden.

**Claims**

1. A method for calibrating an acoustic antenna (10), the acoustic antenna comprising a plurality of transducers ($11_0$, $11_k$), each transducer k, with k = 0,1...K, being able to generate an electrical signal $s_k$ under the effect of a detection of an acoustic wave, the antenna comprising elementary transducers ($11_k$) distributed over an antenna row or an antenna plane, about a reference transducer ($11_0$), the antenna defining a main axis ($Y_0$), passing through the reference transducer, and perpendicular to the antenna row or antenna plane, the method comprising the following steps:

   a) placing a calibration source (5) in at least one position with respect to the antenna, the calibration source being able to transmit a calibration acoustic wave (6) that propagates to the antenna;
   b) measuring signals $s_k$ generated by all or some of the elementary transducers in response to the calibration acoustic wave;

c) on the basis of the measurements performed in step b), determining a temporal phase shift ($p^0_{k,n}$, $p_{k,j}$) of the signal respectively generated by each elementary transducer, each temporal phase shift being defined with respect to a reference signal ($s_0$) generated by the reference transducer;

d) reiterating a) to c), in such a way that, in at least one iteration, the position of the calibration source may be considered to be centered on the main axis;

the method comprising estimating a phase shift, called the intrinsic phase shift, of each elementary transducer with respect to the reference transducer, the estimation of the phase shift comprising:

e) concatenating temporal phase shifts determined in each step c), so as to form a vector of measured phase shifts ( $P^0, \begin{bmatrix} P^0 \\ P \end{bmatrix}$ );

f) taking into account a change-of-basis matrix ($M$);

g) on the basis of the change-of-basis matrix ($M$) and of the vector of measured phase shifts, estimating a phase shift of each elementary transducer with respect to the reference transducer.

Wherein the change-of-basis matrix contains :

- respective distances ($dx_k$, $dz_k$) between the reference transducer and each elementary transducer ;
- or a concatenation of a number of identity matrices ($I_k$) equal to the number of iterations ($N$) performed , the calibration source being centered with respect to the main axis, the size of each identity matrix corresponding to the number of elementary transducers ($K$) for which it is desired to determine the phase shift.

2. The method as claimed in claim 1, wherein the antenna extends along a longitudinal axis (X), and wherein at least one iteration of steps a) to c) is implemented with the calibration source placed in a position off the main axis ($Y_0$), such that the acoustic wave (6) transmitted by the calibration source (5) propagates to the reference transducer in such a way as to make a first angle ($\theta_j$) to the longitudinal axis, the method being such that:

- in step f), the change-of-basis matrix contains the respective distances ($dx_k$), along the longitudinal axis, between the reference transducer and each elementary transducer;
- step g) comprises estimating the first angle ($\theta_j$).

3. The method as claimed in claim 2, wherein, in the change-of-basis matrix ($M$), the distances between the reference transducer and each elementary transducer, along the longitudinal axis, are normalized by a propagation speed of the acoustic wave.

4. The method as claimed in claim 2 or claim 3, wherein the antenna also extends along a lateral axis (Z) that is secant to the longitudinal axis (X), such that the acoustic wave transmitted by the calibration source propagates to the reference transducer in such a way as to make a second angle ($\rho_j$) to the lateral axis (Z), the method being such that:

- in step f), the change-of-basis matrix (M) contains the respective distances ($dz_k$),, along the lateral axis, between the reference transducer and each elementary transducer;
- step g) comprises estimating the second angle ($\rho_j$).

5. The method as claimed in claim 4, wherein, in the change-of-basis matrix (M), the distances between the reference transducer and each elementary transducer, along the lateral axis, are normalized by a propagation speed of the acoustic wave.

6. The method as claimed in any one of the preceding claims, wherein :

- the iterations of steps a) to c) are repeated a plurality of times for at least one given position of the calibration source, the calibration source being centered with respect to the main axis;
- the change of base matrix (M) contains a concatenation of a number of identity matrices ($I_k$) equal to the number of iterations (N) performed, the size of each identity matrix corresponding to the number of elementary transducers (K) for which it is desired to determine the phase shift.

7. The method as claimed in any one of the preceding claims, wherein the iterations of steps a) to c) are repeated a plurality of times for at least one given position of the calibration source.

8. The method as claimed in any one of the preceding claims, comprising, for all or some of the elementary transducers, a step h) of transmitting an acoustic wave to the antenna, and of comparing the signals ($s_k$, $s_0$) respectively generated by each elementary transducer and by the reference transducer in response to the transmitted acoustic wave, so as to assign a gain ($g_k$) to each elementary transducer on the basis of the comparison.

9. The method as claimed in claim 8, wherein the comparison is a ratio between the respective integrals of the absolute values of the signals($s_k$, $s_0$) respectively generated by each elementary transducer and by the reference transducer.

10. The method as claimed in any one of the preceding claims, wherein steps e) to g) are implemented by a processing unit (20) connected to the transducers of the antenna.

11. The method as claimed in in any one of the preceding claims, wherein a transducer of the antenna transmits an acoustic wave to a reflector (7) placed facing the antenna, in such a way that the acoustic wave reflected by the reflector forms the calibration acoustic wave.

12. An acoustic antenna (10), comprising a plurality of transducers ($11_0$, $11_k$), each transducer being able to generate an electrical signal under the effect of a detection of an acoustic wave, the antenna comprising elementary transducers($11_k$) distributed over an antenna row or an antenna plane, about a reference transducer ($11_0$), the antenna defining a main axis ($Y_0$), passing through the reference transducer, and perpendicular to the antenna row or antenna plane, the antenna comprising a processing unit (20), configured to implement steps c) to g) of a method as claimed in in any one of the preceding claims, on the basis of a measurement of signals generated by all or some of the elementary transducers in response to a calibration acoustic wave transmitted by a calibration acoustic source placed facing the antenna.

**Fig. 1A**

**Fig. 1B**

**Fig. 2A**

**Fig. 2B**

**Fig. 2C**

**Fig. 2D**

**Fig. 3**

**Fig. 4**

**Fig. 5A**

**Fig. 5B**

**Fig. 5C**

**Fig. 6**

**EP 3 764 570 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110164467 A
- FR 2699687